(19) Europäisches Patentamt
European Patent Office
Office européen des brevets

(11) **EP 2 725 079 B1**

(12) **EUROPÄISCHE PATENTSCHRIFT**

(45) Veröffentlichungstag und Bekanntmachung des Hinweises auf die Patenterteilung:
**10.12.2014 Patentblatt 2014/50**

(51) Int Cl.:
***C09K 3/18*** *(2006.01)*

(21) Anmeldenummer: **13005131.1**

(22) Anmeldetag: **29.10.2013**

(54) **Umweltfreundliches Enteisungsmittel**

Environmentally friendly deicing composition

Moyen de dégivrage écologique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.10.2012 DE 102012219740**

(43) Veröffentlichungstag der Anmeldung:
**30.04.2014 Patentblatt 2014/18**

(73) Patentinhaber: **Fraunhofer-Gesellschaft zur Förderung der angewandten Forschung e.V. 80686 München (DE)**

(72) Erfinder:
- **Kraft, Axel**
  **45759 Oer-Erkenschwick (DE)**
- **Grän-Heedfeld, Jürgen**
  **46562 Voerde (DE)**
- **Meller, Karl**
  **58454 Witten (DE)**
- **Breitkreuz, Klaas**
  **44879 Bochum (DE)**
- **Fastabend, Anna**
  **47057 Duisburg (DE)**

(56) Entgegenhaltungen:
**US-A- 6 156 226    US-B2- 8 062 544**

EP 2 725 079 B1

**Beschreibung**

Die Anmeldung betrifft eine enteisende Zusammensetzung, genauer gesagt ein Enteisungsmittel. Dieses weist eine wässrige Lösung eines ionischen Bestandteils und eines nichtionischen Bestandteils auf, wobei der ionische Bestandteil ein Lactatsalz umfasst und der nichtionische Bestandteil 1,2-Propandiol (PDO) enthält.

Diese Patentanmeldung beansprucht die Priorität der deutschen Patentanmeldung 10 2012 219 740.0, deren Offenbarungsgehalt hiermit durch Rückbezug aufgenommen wird.

Zur Entfernung von Schnee und Eis sind verschiedene Techniken bekannt. Neben mechanischen Methoden kommt insbesondere die Verwendung von Chemikalien mit "abtauender" Wirkung in Betracht; derartige Chemikalien werden anmeldungsgemäß als Enteisungsmittel bezeichnet.

Im privaten aber auch im öffentlichen Bereich kommen im Winterdienst flüssige und feste Streusalze als Enteisungsmittel zum Einsatz. Diese weisen als ionischen Bestandteil üblicherweise mehr als 95 % Kochsalz auf. Dieses Streusalz schädigt allerdings biologische Systeme wie Straßenbäume und beeinflusst das Grundwasser negativ. Außerdem sind erhebliche Schäden durch Korrosion, insbesondere an Betonteilen, Brückenstahl und Kraftfahrzeugen zu verzeichnen. Auf Flugzeuglandebahnen kommen deshalb grundsätzliche keine chloridhaltigen Enteisungsmittel zum Einsatz. Hier werden Formiat- und Acetat-basierte Enteisungsmittel eingesetzt, insbesondere als Natrium- oder Kalium-Salze.

Ferner sind als Enteisungsmittel auch nichtionische Chemikalien im Einsatz, etwa Ethylenglykol- und Propylenglykollösungen. Auch die Verwendung von Gemischen verschiedener ionischer Substanzen (z.B. US 6,156,226) oder von ionischen und nichtionischen Enteisungsmitteln (z.B. US 7,138,071 B2) sind bekannt.

Der vorliegenden Erfindung liegt daher die Aufgabe zugrunde, ein weiter verbessertes Enteisungsmittel anzugeben, insbesondere ein umweltfreundlicheres Enteisungsmittel, das bevorzugt eine günstigere $CO_2$-Bilanz liefern kann und/oder aus nachwachsenden Rohstoffen herstellbar ist. Ferner sollten neue Enteisungsmittel vorzugsweise auch bei sehr tiefen Temperaturen einsetzbar sein und ferner möglichst auch kosteneffizienter herstellbar sein als die vergleichbaren Enteisungsmittel nach dem Stand der Technik.

Zumindest eine dieser Aufgaben wird durch das Enteisungsmittel gemäß dem Hauptanspruch gelöst. Weitere Ausgestaltungen und Weiterbildungen sind Gegenstand von Unteransprüchen und gehen weiterhin aus der nachfolgenden Beschreibung hervor.

Das erfindungsgemäße Enteisungsmittel umfasst eine wässrige Lösung mit einem ionischen Bestandteil und ferner zusätzlich auch einem nichtionischen Bestandteil (der üblicherweise auch gelöst vorliegt). Die Konzentration der Summe des ionischen und des nichtionischen Bestandteils beträgt bezogen auf das Gesamtgewicht des Enteisungsmittels zumindest 10 Gew.-%, insbesondere zumindest 20 Gew.-%. Als Anionen (An) umfasst der ionische Bestandteil Lactat (das nachfolgend auch als Lac abgekürzt wird) und Acetat (das nachfolgend auch als Ac abgekürzt wird) oder besteht aus diesen beiden Komponenten. Der nichtionische Bestandteil umfasst 1,2-Propandiol (im Folgenden in der Regel nur noch als Propandiol oder PDO bezeichnet; chemisch exakt 1-Methyl-ethan-1,2-diol) oder besteht hieraus. Für den molaren Anteil an Propandiol gilt, dass dieser zumindest ein Zwanzigstel des molaren Anteils an den Anionen des ionischen Bestandteils beträgt. Mit anderen Worten gilt $n_{PdO} > 0,05 * n_{An}$.

Das erfindungsgemäße Enteisungsmittel zeichnet sich ferner dadurch aus, dass der molare Anteil an Lactat zumindest das 0,4-fache des molaren Anteils an Acetat ist und maximal viermal so hoch wie der Acetatanteil ist. Mit anderen Worten gilt:

$$0,4 \leq n_{Lac} : n_{Ac} \leq 4.$$

Häufig wird auch die folgende Ungleichung gelten:

$$0,7 \leq n_{Lac} : n_{Ac} \leq 3.$$

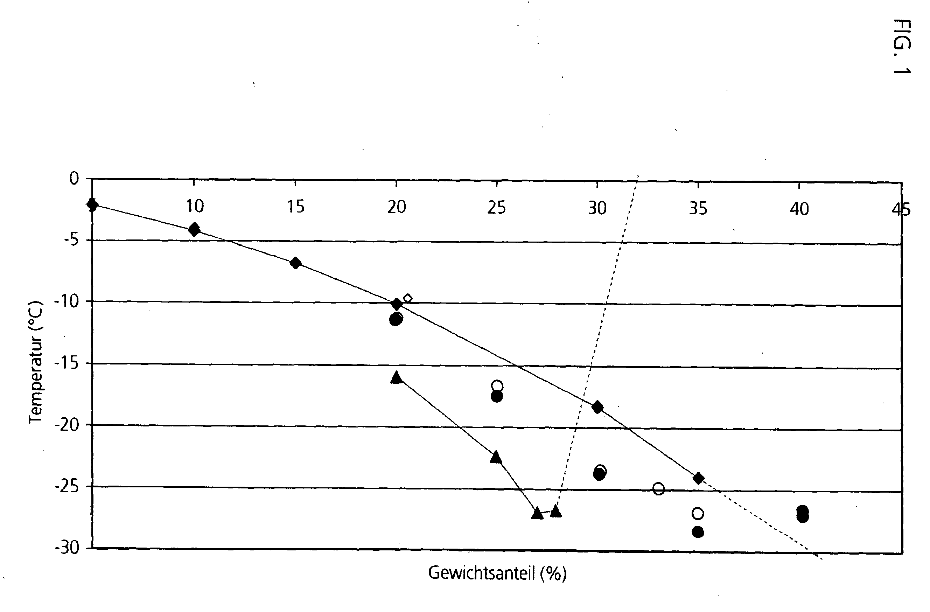

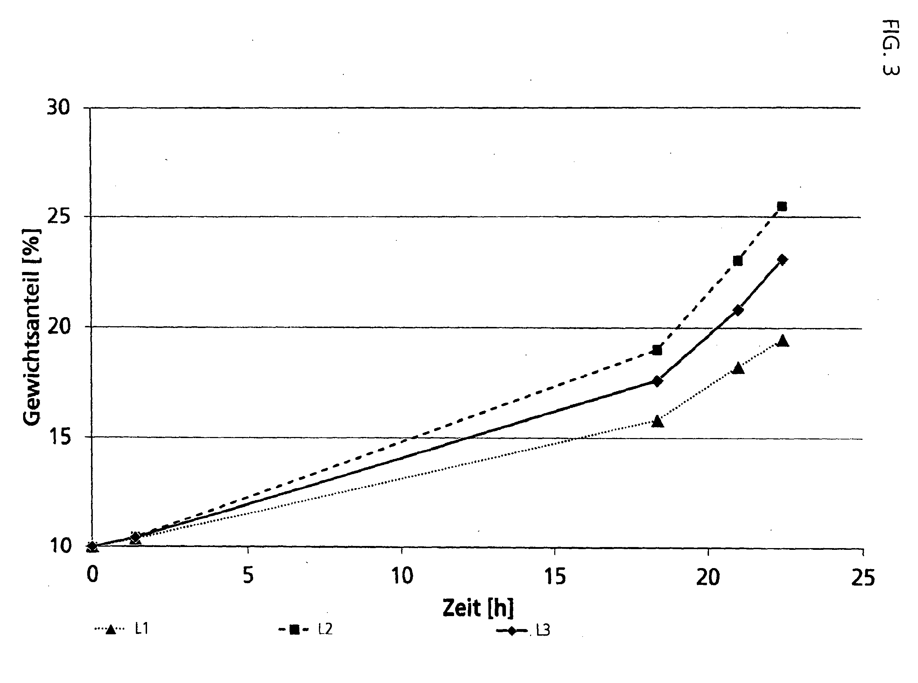

Erfindungsgemäß wurde erkannt, dass mit den vorstehend beschriebenen Enteisungsmitteln - anders als bei reinen Natriumacetatlösungen - auch bei Konzentrationen der nicht-wässrigen Bestandteile (also der ionischen und nichtionischen Bestandteile), die größer sind als 29 Gew.-%, eine Eignung als Enteisungsmittel gegeben ist. Als flüssiges Enteisungsmittel ist Natrium-Acetat als wässrige Lösung mit 30 Gew.-%, bis ca. -27°C einsetzbar. Die Löslichkeitsgrenze ist für Natrium-Acetat ab größer 30 Gew.-% annähernd erreicht; es bildet sich in diesem Bereich ein Eutektikum aus, wodurch der Gefrierpunkt der Lösung deutlich ansteigt (vergleiche auch Figur 1). Zu berücksichtigen ist allerdings, dass auch bei Umgebungstemperaturen unter dem Gefrierpunkt Verdunstung von Wasser erfolgen kann, insbesondere durch starke Sonneneinstrahlung oder Wind. Wenn die Tagestemperaturen über dem Gefrierpunkt liegen, zeigt sich auch ohne Wind und Sonneneinstrahlung, ohnehin ein deutlicher Verdunstungs-Effekt (vergleiche Figur 3). Letzteres ist insbesondere wesentlich, wenn die Anwendung des Enteisungsmittels auf Nachtfröste, Temperaturstürze, Eisglätte oder Glatteis abzielt. Mit dem Trocknungsvorgang geht eine Konzentrationserhöhung einher, die die gefrierpunkterniedrigende Wirkung des Enteisungsmittels steigert. Für den Anwendungsfall bedeutet dies, dass bei rechtzeitigem Ausbringen eines erfindungsgemäßen Enteisungsmittels bereits mit Konzentrationen der nicht-wässrigen Bestandteile von größer 10 Gew.-%, und insbesondere von größer 20 Gew.-%, vor Eintreten eines entsprechenden Witterungsereignisses eine signifikante Konzentrationserhöhung erfolgt oder zumindest erfolgen kann und nicht nur eine Ausbringen in einer Konzentration größer 29 Gew.-% (in der das erfindungsgemäße Enteisungsmittel seine Vorteile voll ausspielen kann) sinnvoll ist. Zu beachten ist in diesem Zusammenhang auch, dass aufgrund der erhöhten Konzentration auch bei einem erneuten Kälteeinbruch die Wirkung des Enteisungsmittels bei tieferen Temperaturen gegeben ist.

In den erfindungsgemäßen Enteisungsmitteln ist das Natriumacetat teilweise durch Lactat-Salze, insbesondere Natriumlactat ersetzt und ferner teilweise durch Propandiol. Dennoch erfolgt kein Einfrieren des Gemisches bei relativ tiefen Temperaturen (also - 25°C bis 0°C), auch wenn sehr hohe Acetatgehalte vorliegen, beispielsweise wenn der molare Acetatanteil 1½ -mal so hoch ist wie der des Lactats und in der Regel auch dann, wenn er 2 ½-mal so hoch ist.

Erfindungsgemäß wurde insbesondere erkannt, dass sich der Gefrierpunkt (nachfolgend auch Taupunkt genannt) einer Lactat/Acetat-Lösung nicht signifikant ändert, wenn ein gewisser Anteil des Acetat/Lactat-Salz-Gemisches durch denselben gewichtsmäßigen Anteil an Propandiol ersetzt wird. Mit anderen Worten ändert sich der Gefrierpunkt nicht wesentlich, wenn x Gramm Acetat/Lactat durch x Gramm Propandiol ersetzt werden und hierdurch die Anzahl der Teilchen um nahezu x mol verringert wird (nämlich x mol Anionen + x mol Kationen, d.h. 2x mol Salzionen durch etwas mehr als 1x mol Propandiol ersetzt werden / PDO und Natriumacetat haben etwa die gleiche molare Masse; die molare Masse von Natriumlactat ist nur etwa 40 % größer als die von PDO). Da die abtauende Wirkung von Enteisungsmitteln wesentlich von der Anzahl der Teilchen abhängt, die in der enteisenden Lösung vorliegen, war dieses Ergebnis nicht zu erwarten.

Die erfindungsgemäßen Enteisungsmittel sind auch schon deshalb vorteilhafter als die nach dem Stand der Technik, da durch den Zusatz von Propandiol die Salzfracht, die in die Umgebung eingebracht wird, deutlich vermindert werden kann und dies bei etwa gleichen Enteisungseigenschaften; sie sind also umweltfreundlicher. Ferner werden durch die verminderte Salzfracht auch die korrodierenden Eigenschaften von Enteisungsmitteln weiter vermindert, was die erfindungsgemäße Zusammensetzung auch für Anwendungen im Luftfahrtbereich interessant macht. Insbesondere sind hier Anwendungen zu nennen, bei denen das Metall Eisen (beispielsweise in Form von Stahl) zugegen ist, bei denen das erfindungsgemäße Enteisungsmittel sogar als Korrosionsinhibitor wirkt.

Ferner wurde auch erkannt, dass sich mit dem erfindungsgemäßen Enteisungsmittel bei Erhöhung der Konzentration im Regelfall eine stärkere Erniedrigung des Taupunkts ergibt als beispielsweise bei reinen Kalium- oder Natriumlactat-Lösungen gleicher Konzentration.

Schließlich führt das Vorhandensein der nichtionischen Komponenten, insbesondere des 1,2-Propandiols und gegebenenfalls zusätzlich des Glycerins zudem zu einer Erhöhung der Viskosität und damit einer verbesserten Haftung auf den Untergründen. Auch bei vollständiger Verdunstung der wässrigen Anteile hat daher das erfindungsgemäße Enteisungsmittel den Vorteil, dass kein mechanischer Abtrag durch Geräte des Winterdiensts, durch Wind und dergleichen erfolgen kann.

Gemäß einer Ausführungsform beträgt die Konzentration der ionischen und nichtionischen Bestandteile des Enteisungsmittels zumindest 25 Gew.-%, insbesondere zumindest 29 Gew.-%. Derartige Ausführungsformen sind besonders dann vorteilhaft, wenn für die Anwendung des Enteisungsmittels eine sofortige optimale Wirkung gefordert ist. Dies kann beispielsweise beim Enteisen von Sonderflächen (wie z.B. Flughafenflächen, die besonderen Sicherheitsbestimmungen unterliegen) der Fall sein oder auch bei anderen Anwendungen, bei denen ein zu bekämpfendes Witterungsereignis weniger als 2 Stunden nach dem vorgesehenen Aufbringen des Enteisungsmittels eintreten wird (beispielsweise gefrierender Regen, Eisregen oder überfrierende Nässe) oder bereits eingetreten ist (beispielsweise Schneeglätte, Eisglätte und dergleichen).

Alle nachfolgend beschriebenen Ausführungsformen gehen zunächst - sofern nicht anders erläutert) vom Vorliegen eines Enteisungsmittels mit Konzentrationen der nicht-wässrigen Bestandteile von größer 29 Gew.-% aus. Es versteht sich von selbst, dass diese Ausführungsformen in entsprechender Weise auch für Enteisungsmittels mit geringeren Konzentrationen ab 10 Gew.-% gelten zumal aus diesen beim Vorliegen entsprechender Witterungsbedingungen auch vor Ort sukzessive Konzentrationen von 29 Gew.-% oder größer gebildet werden.

Gemäß einer Ausführungsform der Erfindung ist im ionischen Bestandteil als Kation (Kat) zumindest Natrium enthalten oder die Kationen des ionischen Bestandteil bestehen ausschließlich aus Natrium (wobei allerdings handelsübliche Verunreinigungen anderer Kationen zugegen sein können). Insbesondere gilt hierbei, dass das molare Verhältnis $n_{Na} : n_{Kat}$ (also der Anteil der Natriumionen an der Gesamtzahl von Kationen) größer ist als das Verhältnis $(n_{An} - 0.5 \cdot n_{Lac}) : n_{An}$ (dass also der Anteil der Natriumionen zumindest so hoch ist, wie der aufsummierte Anteil der Acetationen, der neben Acetat und Lactat vorliegenden etwaigen anderen Anionen und der Hälfte des Anteils der Lactat-Anionen). Hierdurch wird ausgedrückt, dass die vorstehend beschriebenen erfindungsgemäßen Vorteile sich auch dann einstellen, wenn nicht ausschließlich Natrium als Kation vorliegt sondern auch noch ein gewisser Anteil anderer Anionen vorhanden ist, beispielsweise Kalium. Wenn man von den ökonomischen Vorgaben absieht, kann man sogar so weit gehen, zu sagen, dass auch ionische Bestandteile, in denen ausschließlich Kalium als Kation vorliegt, die erfindungsgemäß beschriebenen Erfolge zeigen; die Herstellung derartiger Kalium-basierter Enteisungsmittel ist aber aufgrund des deutlich höheren Preises für Kalium-haltige Grundchemikalien (wie z.B. Kalilauge) wirtschaftlich weniger interessant. Entsprechendes gilt für erfindungsgemäße Enteisungsmittel, bei denen als Kationen im Wesentlichen oder ausschließlich Natrium und Kalium vorliegen und ein Kaliumanteil vorhanden ist, der höher ist als die Hälfte der molaren Menge an Lactat-Anionen.

Gemäß einer Ausführungsform umfassen die Kationen des ionischen Bestandteils im Wesentlichen Natrium oder im Wesentlichen Natrium und Kalium. "Im Wesentlichen" bedeutet hierbei, dass der Anteil des Natriums oder der aufsummierte Anteil an Natrium und Kalium an den Kationen des ionischen Bestandteils zumindest 75 mol-%, insbesondere aber zumindest 90 mol-%, beträgt.

Als Kationen, die neben Natrium und gegebenenfalls noch vorliegen können, sind insbesondere andere Alkalikationen und Erdalkalikationen zu nennen, ferner ist im Einzelfall auch denkbar, dass quarternäre Ammoniumsalze zugegen sind (z.B. Cholinhyrdoxid oder Cholinsalze). Es versteht sich von selbst, dass auch Gemische der vorgenannten Anionen neben Natrium und gegebenenfalls Kalium vorliegen können.

Gemäß einer Ausführungsform beträgt der molare Anteil von Natrium an der Gesamtmenge der Kationen zumindest 95 %. Derartige Enteisungsmittel können besonders kostengünstig hergestellt werden, da bei der Herstellung auf teure Kaliumsalze verzichtet werden kann und Natriumsalze eingesetzt werden können (beispielsweise fallen für Natriumhydroxid im Tonnenmaßstab nur etwa 1/3 der Kosten für die gleiche Menge Kaliumhydroxid an. Zudem wird durch die Vermeidung von Kalium auch eine Überdüngung der Abwässer und schließlich noch eine Verschwendung von Dünger für die Nahrungsmittelproduktion verhindert.

Gemäß einer weiteren Ausführungsform besteht der kationische Anteil des ionischen Bestandteils aus Natrium. Unter "bestehen aus" ist hierbei natürlich zu verstehen, dass handelsübliche Verunreinigungen anderer Kationen, die zwangsläufig durch den Einsatz möglichst billiger Natriumsalze mit enthalten sind, nicht zu berücksichtigen sind.

Gemäß einer weiteren Ausführungsform umfassen die Anionen des ionischen Bestandteils im Wesentlichen Lactat und Acetat. "Im Wesentlichen" bedeutet hierbei, dass der aufsummierte Anteil an Lactat und Acetat an den Anionen des ionischen Bestandteils zumindest 75 mol-%, insbesondere aber zumindest 90 mol-%, beträgt.

Als Anionen, die neben Acetat und Lactat noch vorliegen können, sind insbesondere Formiat, Succinat, Sulfat, Sulfit (das auch als Antioxidans wirkt) und im Einzelfall auch Chlorid zu nennen, ferner ist auch denkbar, dass Carbonat, Hydrogencarbonat und Phosphat zugegen ist. Schließlich können auch Citrat und andere Zuckersäuren mit 5 oder 6 Kohlenstoffatomen als Anionen vorliegen. Es versteht sich von selbst, dass auch Gemische der vorgenannten Anionen neben Acetat und Lactat vorliegen können.

Gemäß einer weiteren Ausführungsform beträgt der aufsummierte molare Anteil der Lactat-Anionen und Acetat-Anionen an der Gesamtmenge der Anionen zumindest 90 %, insbesondere zumindest 92,5 %. Wie bereits vorstehend erwähnt, wäre ein dem erfindungsgemäßen Enteisungsmittel entsprechendes Enteisungsmittel, bei dem kein Lactat enthalten ist, nachteilig, da bei Temperaturen unterhalb von -20°C Acetatlösungen mit Konzentrationen > 29 Gew.-% keine ausreichende abtauende Wirkung oder gar keine abtauende Wirkung mehr zeigen. Durch Mischung mit Lactat-Ionen kann dieser Effekt verhindert werden. Insofern erfüllt ein erfindungsgemäßes Enteisungsmittel, bei dem die Anionen im Wesentlichen durch Lactat und Acetat gebildet werden, die Voraussetzungen ein auch bei tiefen Temperaturen sehr effizientes, biologisch abbaubares und daneben auch besonders kostengünstiges Enteisungsmittel herzustellen. Dies gilt vor allem, weil einerseits ein relativ hoher Acetatanteil enthalten ist und andererseits die Möglichkeit hochkonzentrierte Lösungen herzustellen gegeben ist). Erfindungsgemäß ist es also möglich, Enteisungsmittel bereitzustellen, die auch eine zeitlich lang andauernde Wirksamkeit besitzen. Bei höher konzentrierten Lösungen kommt nämlich der Effekt zum Tragen, dass durch das Schmelzen von Eis und Schnee zwar eine Verdünnung der Lösung erfolgt und hiermit einhergehend eine Veränderung des Taupunkts in Richtung höherer Temperaturen, allerdings ausgehend von konzentrierteren Lösungen erst zu einem späteren Zeitpunkt die Grenzkonzentration erreicht ist, bei dem ein bestimmter maximal erwünschter Taupunkt überschritten wird. So liegt beispielsweise der Taupunkt einer 28%igen Acetatlösung bei etwa -27°C; bei Verdünnung auf das etwa 1 ½-fache Volumen beträgt der Taupunkt nur noch etwa -15°C. Derartige Temperaturen werden aber in durchschnittlichen mitteleuropäischen Wintern häufig erreicht, so dass für die Enteisung größerer Flächen (z.B. im Flughafenbereich) dementsprechend größere Mengen an 28%iger Acetatlösung (bzw. allgemeiner: Enteisungsmittel) bereit zu stellen wären. Die erfindungsgemäß eingesetzte Lactat/Acetat-Mischung kann dagegen auch in höheren Konzentrationen verwendet werden. Beispielsweise weist eine 40%ige Lösung von 7 Teilen Natriumlactat und 10 Teilen Natriumacetat ebenfalls einen Gefrierpunkt von etwa -27°C auf; erst bei einer Verdünnung auf in etwa das doppelte Volumen wird die Schwelle bei -15°C in Richtung höherer Temperaturen überschritten. Das erfindungsgemäße Enteisungsmittel ermöglicht daneben auch eine Verwendung für Feuchtsalze (hoch konzentrierte Lösungen werden dabei zum Anfeuchten kristalliner Salze verwendet; sie werden auf Straßenstreufahrzeugen aus Sole und Streusalz hergestellt und von dort aus direkt ausgebracht) und sind nicht zuletzt auch aufgrund ihres geringeren Wassergehalts kostengünstiger zu transportieren.

Gemäß einer weiteren Ausführungsform sind im ionischen Bestandteil als Anionen ausschließlich Lactat und Acetat vorhanden. Daneben existieren als Anionen lediglich die üblichen Verunreinigungen, die insbesondere bei der Verwendung von (wiederum aus kommerziellen Gründen eingesetzten) handelsüblichem Acetat und gegebenenfalls auch handelsüblichem Lactat mitenthalten sind. Derartige Verunreinigungen werden üblicherweise am Gesamtanteil der Anionen nicht mehr als 5 mol-% ausmachen.

Gemäß einer weiteren Ausführungsform umfasst der nichtionische Bestandteil im Wesentlichen 1,2-Propandiol oder 1,2-Propandiol und Glycerin."Im Wesentlichen" bedeutet hierbei, dass der Anteil des Propandiols oder der aufsummierte Anteil an Propandiol und Glycerin an den nichtionischen (nicht-wässrigen) Bestandteilen zumindest 75 mol-%, insbesondere aber zumindest 90 mol-%, beträgt. Vielfach wird der nichtionische Bestanteil aus Propandiol bestehen oder aus Propandiol und Glycerin bestehen.

Propandiol und Glycerin können besonders kostengünstig dem Enteisungsmittel zugefügt werden, da diese Chemikalien beispielsweise durch katalytische Konversionen von Abfallglycerin hergestellt werden können. Ferner hat sich Propandiol als besonders effektiver nichtionischer Bestandteil bei den erfindungsgemäßen Enteisungsmitteln erwiesen. Durch die Hinzufügung des Propandiols kann - wie bereits erwähnt - Natriumacetat ersetzt werden, ohne dass sich bei gleicher Konzentration der Taupunkt wesentlich ändert.

Unter einer wesentlichen Änderung des Taupunkts, wie sie im vorstehenden Absatz beschrieben ist, wird erfindungsgemäß eine Änderung des Taupunkts verstanden, bei der bei einer gegebenen Konzentration (in Gew.-%) durch Austausch des Natriumacetats und/oder des Natriumlactats eine Erhöhung des Taupunkts um mehr als 3°C eintritt. Häufig ist erfindungsgemäß sogar lediglich eine Erhöhung des Taupunkts um weniger als 2°C und oft sogar um weniger als 2°C zu beobachten.

Vorzugsweise wird der Anteil an Propandiol so eingestellt, dass ein Anstieg des Taupunkts zu verzeichnen ist, der maximal etwa 2 bis 3°C beträgt. Vielfach hat sich hierbei als vorteilhaft erwiesen, dass der Anteil an Propandiol mindestens ein Fünftel des molaren Anteils von Lactat-Anionen beträgt, höchstens aber so groß ist wie der gesamte molare Anteil an Anionen.

Gemäß einer weiteren Ausführungsform sind die nicht-wässrigen Bestandteile des Enteisungsmittels so gewählt, dass sie - abgesehen von dem kommerziell relativ günstig erwerbbaren Natriumacetat bzw. von Natronlauge und Essigsäure - mittels einer katalytischen Reaktion aus Alkoholen oder Aldehyden herstellbar sind. Ein derartiges Verfahren beschreibt beispielsweise die EP 2 100 871 A1, auf die bezüglich der Herstellung eines Gemisches, das Lactat (bzw. Milchsäure), Propandiol und gegebenenfalls auch Glycerin enthält, vollumfänglich Bezug genommen wird. Die Herstellung von Lactat aus etwaiger erhaltener Milchsäure kann durch Neutralisation mittels Alkalilauge (insbesondere NaOH und gegebenenfalls auch KOH) erfolgen.

Insbesondere können Lactat, Propandiol und gegebenenfalls Glycerin erhalten werden, indem - wie in der EP 2 100 871 A1 beschrieben - ein primärer Alkohol mit mindestens drei Kohlenstoffatomen oder ein Aldehyd mit mindestens drei Kohlenstoffatomen in Gegenwart eines Übergangsmetall-Katalysators zu Milchsäure oder deren Salzen umgesetzt wird. Das Ausgangsmaterial kann hierbei insbesondere ausgewählt sein aus

(i) 1,2,3-Propantriol (Glycerin) und dessen linearen, verzweigten oder cyclischen Oligomeren (Oligoglycerinen) und Polymeren (Polyglycerinen);
(ii) Glycerinaldehyd (2,3-Hydroxypropionaldehyd);
(iii) Zuckern und Zuckeralkoholen, insbesondere Mono- und Disacchariden,
(iv) Mono- und Polysacchariden, insbesondere auf Basis von Pentosen oder Hexosen, bevorzugt Stärke, Hemicellulosen und Cellulose;

sowie deren Gemischen. Ein derartiges Gemisch ist aus kostengünstig erwerbbaren Abfallmaterialien (beispielsweise Abfallglycerin) relativ einfach herstellbar, so dass ein Propandiol- und Milchsäuregemisch erhalten wird, das gegenüber einem identischen Gemisch aus käuflich erworbenen Reinstoffen um etwa 70 bis 90 % reduzierte Kosten ermöglicht. Auch die Katalysatoren gemäß der EP 2 100 871 A1 tragen nicht wesentlich zu den Kosten bei; es handelt sich bevorzugt um Übergangsmetall-Katalysatoren, die beispielsweise in Konzentrationen von 0.01 bis 1 g Katalysator pro 1 g primärer Alkohol vorliegen können. Es sei im Übrigen darauf hingewiesen, dass etwa 5 bis 10 Gew.-%, im Einzelfall sogar bis zu 25 Gew.-% der gemäß dem Verfahren nach der EP 2 100 871 A1 erhaltenen nicht wässrigen Bestandteile laut Analytik Dimere des Intermediates 2,3-Dihydroxy-propanal oder Zuckersäuren sind.

Zumindest eine der erfindungsgemäßen Aufgaben wird auch durch Verwendung des vorstehend näher beschriebenen Enteisungsmittels für Langzeitanwendungen von mehr als 12 Stunden, insbesondere mehr als 48 Stunden gelöst. Hierbei sind insbesondere auch Enteisungsmittel mit einer Konzentration der ionischen und nichtionischen Bestandteile von zumindest 10 Gew.-%, beispielsweise zumindest 15 Gew.-%, beispielsweise zumindest 20 Gew.-% umfasst.

Gemäß einer Ausführungsform ist die vorstehende Verwendung insbesondere dann vorteilhaft, wenn während der Langzeitanwendung zumindest zeitweise eine Verdunstung des Wassers der wässrigen Lösung des Enteisungsmittels erfolgt. Die Verdunstung kann dabei beispielsweise durch Sonneneinstrahlung und/oder Wind hervorgerufen werden.

Gemäß einer weiteren Ausführungsform ist die vorstehende Verwendung insbesondere dann vorteilhaft, wenn sich die Verwendung des Enteisungsmittels nach einer Wettervorhersage richtet. Wird in der Wettervorhersage der Eintritt eines ungünstigen Witterungsereignisses (beispielsweise gefrierender Regen, Eisregen und überfrierende Nässe) vorausgesagt, so kann zumindest 3 Stunden vor dem Eintreten des Witterungsereignisses auch eine schwächer konzentrierte Lösung ausgebracht werden, so dass bis zum Eintreten noch ausreichend Zeit verbleibt, in der eine Aufkonzentrierung des Enteisungsmittels erfolgt, so dass dieses seine optimale Wirkungen als konzentriertere Lösung voll ausspielen kann.

Zusammenfassend kann festgestellt werden, dass mit dem erfindungsgemäßen Enteisungsmittel eine Zusammensetzung bereitgestellt wird, die zum einen eine sehr günstige $CO_2$-Bilanz aufweisen kann, weil sie aus überwiegend nachwachsenden Rohstoffen herstellbar ist, dass sie sich ferner für die Enteisung von Sonderflächen (wie z.B. Flughafenflächen, die besonderen Sicherheitsbestimmungen unterliegen) eignet, weil sie auch in hohen Konzentrationen herstellbar und wirksam ist und die schließlich auch sehr kostengünstig herstellbar ist. Außerdem weisen die erfindungsgemäßen Enteisungsmittel nicht die nachteiligen Eigenschaften von Kochsalzlösungen auf, wie insbesondere die Beeinträchtigung der Umwelt und die nachteiligen Korrosionseigenschaften dieser Lösungen.

Die erfindungsgemäßen Enteisungsmittel werden vorteilhafterweise mit einem hohen Anteil an Natrium als Kation in der ionischen Komponente bereitgestellt; für die Herstellung des Enteisungsmittels wird häufig Kalilauge oder Natronlauge verwendet werden; Natronlauge ist derzeit aber um den Faktor 3 billiger als Kalilauge, so dass sich aus wirtschaftlichen Gründen insbesondere die Verwendung von Natronlauge anbietet.

Die erfindungsgemäßen Enteisungsmittel werden nachfolgend ohne Einschränkung der Allgemeinheit noch näher anhand von Beispielen und Figuren erläutert.

Die Taupunkte wurden erfindungsgemäß mittels Differential Scanning Calorimetry (DSC) ermittelt. Sobald in der Probe (jeweils 5 und 10 mg) eine Enthalpieänderung aufgrund einer Phasenumwandlung stattfindet weicht der Wärmestrom des Probentiegels von der Basislinie ab und ist als thermischer Effekt in Form eines Peaks beobachtbar.

Zur Messung der Taupunkte wird das dynamische Differenzkalorimeter "µDSC VII" der Firma Setaram verwendet. (Messbereich des Gerätes:Temperaturbereich: -40°C bis 115°C, maximal -45°C bis 120°C; Heiz-/Kühlraten: 0,1 K/min bis 1,2 K/min., maximal 2 K/min)

Die Analyse des Messkurvenverlaufs liefert die extrapolierte Anfangstemperatur (Onset) und die Peak-Maximum-Temperatur sowie über eine Integration der Peakfläche die Kristallisations- bzw. Schmelzenthalpie.

Beispiel 1 (Vergleichsbeispiel)

Zunächst wurde reine Acetatlösung in Wasser vermessen. Es zeigt sich, dass bei Konzentrationen >28 Gew.-% ein Einfrieren erfolgt; Konzentrationen von 27 und 28 Gew.-% liefern Gefrierpunkte von -26,9 bzw. -26,7°C; Konzentrationen von 20 % Gefrierpunkte von -15,9°C.

Beispiel 2 (Vergleichsbeispiel)

Es wurden reine Natriumlactatlösungen vermessen. Eine Lösung mit 30 Gew.-% zeigt einen Gefrierpunkt von -18,3°C, eine Lösung von 20 Gew.-% nur noch einen Gefrierpunkt von -10,1°C.

Beispiel 3 (Vergleichsbeispiel)

Es wurde eine Lösung aus 2 mol Lactat pro mol Acetat hergestellt. Diese weist bei einer Konzentration von 40 Gew.-% einen Taupunkt von -26,8°C und bei 30 Gew.-% einen Taupunkt von -23,7°C auf.

Beispiel 4 (erfindungsgemäße Beispiele)

Ersetzt man in der Lösung gemäß Beispiel 3 Natriumacetat und Natriumlactat durch Propandiol (so dass das Acetat/Lactat-Verhältnis unverändert bleibt), so zeigt sich, dass bei einem Gemisch mit einem Anteil von 0,2 mol Propandiol pro mol Lactat und einer Konzentration der Lösung von 30 Gew.-% ein Gefrierpunkt von -23,5°C erhalten wird. Dieser liegt lediglich 0,2°C über dem Wert, der in Beispiel 3 (d.h. ohne Propandiol) erhalten wird. Die Messwerte von stärker konzentrierten Lösungen mit 35 Gew.-% (und ansonsten gleichen molaren Verhältnissen) sind schwer zu ermitteln, da sich sehr breite zwischen -21,5 und -34,6 °C liegende Schmelzbereiche ausbilden. Der eigentliche Gefrierpunkt liegt bei etwa -27 °C. Der gefundene Effekt wird so interpretiert, dass eine kinetische Hemmung des Gefrierprozesses vorliegt, was für Enteisungsmittel aber vorteilhaft ist, da durch die kinetische Hemmung in kleineren zeitlichen Dimensionen, wie sie beim täglich oder gar stündlich (z.B. bei Flughäfen) wiederkehrenden Aufbringen weiterer Enteisungsmittel vorliegen, hierdurch gewissermaßen eine zusätzliche Absenkung des Gefrierpunkts erreicht werden kann.

In Figur 1 ist das Verhalten des Gefrierpunkts verschiedener Enteisungsmittel abhängig von der Konzentration gezeigt. Man kann erkennen, dass der Gefrierpunkt von Natriumacetat (Dreiecke) mit steigender Konzentration zunächst stark sinkt, dann aber ab einer Konzentration von 28 Gew.-% schlagartig ansteigt. Natriumlactat-Lösungen (Rauten -ausgefüllt) zeigen dieses Verhalten nicht, allerdings werden auch bei einer gegebenen Konzentration weniger tiefe Temperaturen als Taupunkte erreicht als bei Natriumacetat-Lösungen. Für das Natriumlactat/Natriumacetat-Gemisch gemäß Beispiel 3 ist mit ausgefüllten Kreisen dargestellt. Es zeigt sich, dass diese Lösungen bei gegebenem Konzentrationsverhältnis in etwa Gefrierpunkte erreichen, die zwischen denen reiner Natriumacetat- und Natriumlactat-Lösungen liegen. Sie entsprechen in etwa denen von Kaliumformiat-Lösungen. Ersetzt man hier einen Teil des Natriumlactats und Natriumacetats durch Propandiol (erfindungsgemäßes Beispiel 4), so ergibt sich keine signifikante Änderung des Gefrierpunkts (nicht ausgefüllte Kreise). Es wurde auch festgestellt, dass ein entsprechender Effekt auftritt, wenn in Lösungen von reinem Natriumlactat das Natriumlactat durch PDO ersetzt wird (Rauten - nicht ausgefüllt).

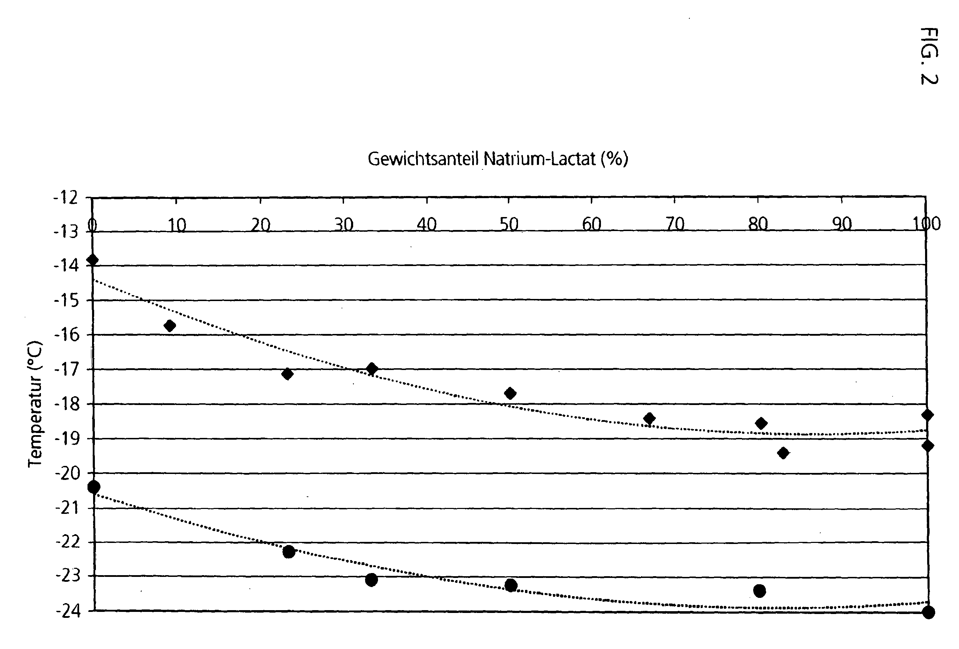

In Figur 2 ist die Gefrierpunktsänderung beim sukzessiven Ersatz von Natriumlactat durch Propandiol zu sehen. Es zeigt sich, dass bei Lösungen mit 30 Gew.-% (Rauten) bzw, 35 Gew.-% (Kreise) keine signifikante Änderung des Gefrierpunkts stattfindet. Die Lösungen des reinen Lactats besitzen einen Gefrierpunkt von ca. - 18,5 °C bzw. -24 °C. Erst bei einem Natriumlactat/Propandiol-Verhältnis von etwa 1:1 ist der Gefrierpunkt um ungefähr 1 °C erhöht; bei einem Verhältnis von etwa 4:1 immer noch um nur ca. 2 °C. Entsprechendes gilt für die erfindungsgemäßen Gemische.

Beispiel 5 (Trocknungsversuch)

In Petrischalen gleicher Größe mit Durchmesser von je 10 cm werden jeweils 10g eines Enteisungsmittels gegeben, das eine Konzentration von 10 Gew.-% aufweist. Diese Lösungen werden bei Umgebungsbedingungen (25°C, 1 bar) durch Verdunstung simultan getrocknet. Die Gewichtsabnahme wird mit Waagen protokolliert. Eingesetzt werden Lösungen aus Natriumchlorid (L1), Natriumacetat (L2) und einer Mischung aus Natriumlactat, Natriumacetat und 1,2-Propandiol im Molverhältnis Natriumlactat/ Natriumacetat = 2mol/1mol und Natriumlactat/1,2-Propandiol = 5mol/1mol (L3).

Figur 3 zeigt, dass sowohl (L2) als auch (L3) schneller trocknen als die Referenzlösung (L1). Für die Anwendung als Enteisungsmittel ist diese Eigenschaft vorteilhaft, da die mit dem Trocknungsvorgang einhergehende Konzentrationserhöhung die gefrierpunkterniedrigende Wirkung des Enteisungsmittels steigert. Für den Anwendungsfall bedeutet dies, dass das erfindungsgemäße Enteisungsmittel, welches durch Tau- und Niederschlagswasser während der Anwendung verdünnt vorliegen kann, schneller als konventionelle Enteisungsmittel (bspw. Natriumchlorid) einen bevorzugten erhöhten Konzentrationsbereich durch natürliche Trocknung wieder erreicht. Entsprechend gilt, dass auch bei rechtzeitigem Ausbringen eines schwach konzentrierten erfindungsgemäßen Enteisungsmittels durch vor Eintreten eines vorhergesagten Witterungsereignisses wie gefrierendem Regen, Eisregen oder überfrierender Nässe eine signifikante Konzentrationserhöhung erfolgt. Aufgrund der erhöhten Konzentration ist bei einem erneuten Kälteeinbruch die Wirkung des Enteisungsmittels auch bei tieferen Temperaturen gegeben.

Das Vorhandensein der nicht-ionischen Komponenten, insbesondere 1,2-Propandiol und gegebenenfalls zusätzlich Glycerin bewirkt zudem eine Erhöhung der Viskosität und damit eine verbesserte Haftung auf den Untergründen. Bei vollständiger Verdunstung des Wassers hat daher das erfindungsgemäße Enteisungsmittel gegenüber reinen Salzlösungen den Vorteil, dass kein mechanischer Abtrag durch Geräte des Winterdiensts oder durch Wind erfolgen kann; gegenüber Natriumacetat besteht-wie bereits erwähnt - der Vorteil, dass letzteres in hohen Konzentrationen oder in Substanz keine guten Enteisungseigenschaften besitzt.

**Patentansprüche**

1. Enteisungsmittel, umfassend eine wässrige Lösung eines ionischen und eines nichtionischen Bestandteils mit einer Konzentration dieser Bestandteile von zumindest 10 Gew.-%, insbesondere zumindest 20 Gew.-%,
wobei der ionische Bestandteil als Kation (Kat) zumindest Natrium und als Anionen (An) zumindest Lactat (Lac) und Acetat (Ac) umfasst,
das molare Verhältnis $n_{Na} : n_{Kat}$ größer ist als das Verhältnis $(n_{An} - 0,5*n_{Lac}) : n_{An}$ und für das molare Verhältnis $n_{Lac} : n_{Ac}$ gilt: $0,4 \leq n_{Lac} : n_{Ac} \leq 4$, und insbesondere gilt $n_{Lac} : n_{Ac}$ gilt: $0,7 \leq n_{Lac} : nAc \leq 3$, und wobei
der nichtionische Bestandteil 1,2-Propandiol (PDO) umfasst und
für den molaren Anteil an 1,2-Propandiol gilt, dass $n_{PDO}$ größer ist als $0,05*n_{An}$.

2. Enteisungsmittel nach dem vorhergehenden Anspruch, wobei die Konzentration der ionischen und nichtionischen Bestandteile zumindest 25 Gew.-%, insbesondere zumindest 29 Gew.-% beträgt.

3. Enteisungsmittel nach dem vorhergehenden Anspruch, wobei der molare Anteil von Natrium an der Gesamtmenge der Kationen zumindest 95% beträgt.

4. Enteisungsmittel nach dem vorhergehenden Anspruch, wobei die Kationen des ionischen Bestandteils aus Natrium bestehen.

5. Enteisungsmittel nach einem der vorhergehenden Ansprüche, wobei der molare Anteil von Lactat und Acetat an der Gesamtmenge der Anionen zumindest 90 % beträgt.

6. Enteisungsmittel nach dem vorhergehenden Anspruch, wobei die Anionen des ionischen Bestandteils aus Lactat und Acetat bestehen.

**7.** Enteisungsmittel nach einem der vorhergehenden Ansprüche, wobei der nichtionische Bestandteil aus 1,2-Propandiol besteht.

**8.** Enteisungsmittel nach einem der Ansprüche 1 bis 5, wobei der nichtionische Bestandteil neben 1,2-Propandiol Glycerin umfasst oder aus diesen beiden Komponenten besteht.

**9.** Enteisungsmittel nach einem der vorhergehenden Ansprüche, wobei für den molaren Anteil an 1,2-Propandiol gilt, dass $n_{PDO}$ größer ist als $0{,}2 \cdot n_{Lac}$.

**10.** Enteisungsmittel nach dem vorhergehenden Anspruch, wobei für den molaren Anteil an 1,2-Propandiol gilt, dass $n_{PDO}$ kleiner ist als $n_{An}$.

**11.** Enteisungsmittel nach dem vorhergehenden Anspruch, wobei die nicht wässrigen Bestandteile mittels einer katalytischen Reaktion zumindest teilweise aus primären Alkoholen oder primären Aldehyden als Ausgangsmaterialen hergestellt sind, wobei die Ausgangsmaterialien insbesondere ausgewählt sind aus

(i) 1,2,3-Propantriol (Glycerin) und dessen linearen, verzweigten oder cyclischen Oligomeren (Oligoglycerinen) und Polymeren (Polyglycerinen);
(ii) Glycerinaldehyd (2,3-Hydroxypropionaldehyd);
(iii) Zuckern und Zuckeralkoholen, insbesondere Mono- und Disacchariden,
(iv) Mono- und Polysacchariden, insbesondere auf Basis von Pentosen oder Hexosen, bevorzugt Stärke, Hemicellulosen und Cellulose;

sowie deren Gemischen.

**12.** Verwendung eines Enteisungsmittels nach einem der vorhergehenden Ansprüche für Langzeitanwendungen von mehr als 12 Stunden, insbesondere mehr als 48 Stunden.

**13.** Verwendung nach dem vorhergehenden Anspruch, wobei während der Langzeitanwendung zumindest zeitweise eine Verdunstung des Wassers der wässrigen Lösung des Enteisungsmittels erfolgt.

**14.** Verwendung nach dem vorhergehenden Anspruch, wobei die Verdunstung durch Sonneneinstrahlung und/oder Wind hervorgerufen wird.

**15.** Verwendung nach einem der drei vorhergehenden Ansprüche, wobei die Verwendung des Enteisungsmittels auf ein in einer Wettervorhersage vorhergesagtes Witterungsereignis bezogen ist und der vorhergesagte Eintritt des Witterungsereignisses zumindest 3 Stunden nach dem vorgesehenen Aufbringen des Enteisungsmittels liegt, wobei das Witterungsereignis insbesondere ausgewählt ist aus gefrierendem Regen, Eisregen und überfrierender Nässe.

**Claims**

**1.** Deicing composition, comprising an aqueous solution of an ionic and of a non-ionic constituent with a concentration of these constituents of at least 10% by weight, in particular at least 20% by weight, wherein
the ionic constituent comprises as cation (Cat) at least sodium and as anions (An) at least lactate (Lac) and acetate (Ac),
the molar ratio $n_{Na} : n_{Cat}$ is greater than the ratio $(n_{An} - 0.5 \cdot n_{Lac}) : N_{An}$ and for the molar ratio $n_{Lac} : n_{Ac}$ the following applies: $0.4 \leq n_{Lac} : n_{Ac} \leq 4$, and in particular $n_{Lac} : n_{Ac}$ the following applies; $0.7 \leq n_{Lac} : n_{Ac} \leq 3$, and where
the non-ionic constituent comprises 1,2-propanediol (PDO) and
for the molar fraction of 1,2-propanediol the following applies, $n_{PDO}$ is greater than $0.05 \cdot n_{An}$.

**2.** Deicing composition according to the preceding claim, where the concentration of the ionic and non-ionic constituents is at least 25% by weight, in particular at least 29% by weight.

**3.** Deicing composition according to the preceding claim, where the molar fraction of sodium in the total amount of cations is at least 95%.

**4.** Deicing composition according to the preceding claim, where the cations of the ionic constituent consist of sodium.

**5.** Deicing composition according to one of the preceding claims, where the molar fraction of lactate and acetate in the total amount of anions is at least 90%.

**6.** Deicing composition according to the preceding claim, wherein the anions of the ionic constituent consist of lactate and acetate.

**7.** Deicing composition according to one of the preceding claims, where the non-ionic constituent consists of 1,2-propanediol.

**8.** Deicing composition according to one of Claims 1 to 5, where the non-ionic constituent comprises glycerol besides 1,2-propanediol or consists of these two components.

**9.** Deicing composition according to one of the preceding claims, where for the molar fraction of 1,2-propanediol the following applies: $n_{PDO}$ is greater than $0.2*n_{Lac}$.

10. Deicing composition according to the preceding claim, where for the molar fraction of 1,2-propanediol the following applies: $n_{PDO}$ is less than $n_{An}$.

11. Deicing composition according to the preceding claim, where the nonaqueous constituents are prepared by means of a catalytic reaction at least partially from primary alcohols or primary aldehydes as starting materials, where the starting materials are in particular selected from

> (i) 1,2,3-propanetriol (glycerol) and its linear, branched or cyclic oligomers (oligoglycerols) and polymers (polyglycerols);
> (ii) glycerol aldehyde (2,3-hydroxypropionaldehyde);
> (iii) sugars and sugar alcohols, in particular mono- and disaccharides,
> (iv) mono- and polysaccharides, in particular based on pentoses or hexoses, preferably starch, hemicelluloses and cellulose;

and mixtures thereof.

12. Use of a deicing composition according to one of the preceding claims for long term applications of more than 12 hours, in particular more than 48 hours.

13. Use according to the preceding claim, where during the long term application an evaporation of the water of the aqueous solution of the deicing composition takes place at least at times.

14. Use according to the preceding claim, where the evaporation is brought about by solar irradiation and/or wind.

15. Use according to one of the three preceding claims, where the use of the deicing composition is based on a weather event predicted in a weather forecast and the predicted onset of the weather event is at least three hours after the scheduled application of the deicing composition, where the weather event is selected in particular from freezing rain, sleet and black ice.

**Revendications**

1. Composition de dégivrage, comprenant une solution aqueuse d'un constituant ionique et d'un constituant non ionique à une concentration de ces constituants d'au moins 10 % en poids, en particulier d'au moins 20 % en poids,

dans laquelle le constituant ionique comprend comme cation (cat) au moins du sodium et comme anions (an) au moins du lactate (lac) et de l'acétate (ac), le rapport molaire $n_{Na}$ : $n_{cat}$ est supérieur eu rapport $(n_{an} - 0,5*n_{lac})$ : $n_{an}$ et pour le rapport molaire $n_{lac} = n_{ac}$ il s'applique $0,4 \leq n_{lac} : n_{ac} \leq 4$, et en particulier pour $n_{lac} : n_{ac}$ il s'applique $0,7 \leq n_{lac} : n_{ac} \leq 3$, et dans laquelle

le constituant non ionique comprend le 1,2-propanediol (PDO) et pour la proportion molaire de 1,2-propanediol il s'applique que $n_{PDO}$ est supérieur à $0,05*n_{an}$.

2. Composition de dégivrage selon la revendication précédente, dans laquelle la concentration des constituants ionique et non ionique est d'au moins 25 % en poids, en particulier d'au moins 29 % en poids.

3. Composition de dégivrage selon la revendication précédente, dans laquelle
le rapport molaire du sodium à la quantité totale des cations est d'au moins 95 %.

4. Composition de dégivrage selon la revendication précédente, dans laquelle
les cations du constituant ionique consistent en sodium.

5. Composition de dégivrage selon l'une quelconque des revendications précédentes, dans laquelle
la proportion molaire du lactate et de l'acétate par rapport à la quantité totale des anions est d'au moins 90 %.

6. Composition de dégivrage selon la revendication précédente, dans laquelle
les anions du constituant ionique consistent en lactate et acétate.

7. Composition de dégivrage selon l'une quelconque des revendications précédentes, dans laquelle
le constituant non ionique consiste en 1,2-propanediol.

8. Composition de dégivrage selon l'une quelconque des revendications 1 à 5, dans laquelle
le constituant non ionique en plus de 1,2-propanediol comprend du glycérol ou consiste en ces deux composants.

9. Composition de dégivrage selon l'une quelconque des revendications précédentes, dans laquelle
pour la proportion molaire de 1,2-propanol il s'applique que $N_{PDO}$ est supérieur à $0,2*n_{lac}$.

10. Composition de dégivrage selon la revendication précédente, dans laquelle

pour la proportion molaire de 1,2-propanol il s'applique que $n_{PDO}$ est inférieur à $n_{an}$.

11. Composition de dégivrage selon la revendication précédente, dans laquelle
les constituants non aqueux sont préparés par une réaction catalytique au moins en partie à partir d'alcools primaires ou d'aldéhydes primaires en tant que produits de départ, les produits de départ étant en particulier choisis parmi

(i) le 1,2,3-propanetriol (glycérol) et ses oligomères linéaires, ramifiés ou cycliques (oligoglycérols) et polymères (polyglycérols) ;
(ii) l'aldéhyde glycérique (2,3-hydroxy-propionaldéhyde) ;
(iii) des sucres et alcools glucidiques, en particulier des mono- et disaccharides,
(iv) des mono- et polysaccharides, en particulier à base de pentoses ou d'hexoses, de préférence l'amidon, les hémicelluloses et la cellulose ;

ainsi que des mélanges de ceux-ci.

12. Utilisation d'une composition de dégivrage selon l'une quelconque des revendications précédentes, pour des applications de longue durée de plus de 12 heures, en particulier de plus de 48 heures.

13. Utilisation selon la revendication précédente, dans laquelle
pendant l'application de longue durée il s'effectue au moins par moments une évaporation de l'eau de la solution aqueuse de la composition de dégivrage.

14. Utilisation selon la revendication précédente, dans laquelle l'évaporation est provoquée par le rayonnement solaire et/ou le vent.

15. Utilisation selon l'une quelconque des trois revendications précédentes,
l'utilisation de la composition de dégivrage étant basée sur un événement atmosphérique annoncé dans une prévision météorologique et l'apparition annoncée de l'événement atmosphérique ayant lieu au moins 3 heures après l'application prévue de la composition de dégivrage, l'événement atmosphérique étant en particulier choisi parmi la pluie verglaçante, la pluie givrante et le brouillard givrant.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012219740
- US 6156226 A
- US 7138071 B2
- EP 2100871 A1